(19) Europäisches Patentamt
European Patent Office
Office européen des brevets

(11) Publication number: **0 176 609 B1**

(12) EUROPEAN PATENT SPECIFICATION

(45) Date of publication of patent specification: **25.07.90**

(51) Int. Cl.⁵: **C 08 L 39/04,** C 08 L 101/02, C 08 F 226/06

(21) Application number: **84111671.8**

(22) Date of filing: **29.09.84**

(54) **Process for preparing latexes of polymers having pendant coreactive and oxazoline groups.**

(43) Date of publication of application:
**09.04.86 Bulletin 86/15**

(45) Publication of the grant of the patent:
**25.07.90 Bulletin 90/30**

(84) Designated Contracting States:
**DE FR GB NL**

(56) References cited:
**DE-A-2 012 810**
**DE-A-2 019 149**
**FR-A-1 547 176**
**GB-A-1 134 050**
**US-A-3 382 197**
**US-A-3 505 297**
**US-A-3 692 757**
**US-A-4 474 923**

(73) Proprietor: **THE DOW CHEMICAL COMPANY**
**2030 Dow Center Abbott Road P.O. Box 1967**
**Midland Michigan 48640-1967 (US)**

(72) Inventor: **Keskey, William H.**
**3872 Marilyn**
**Midland, Michigan 48640 (US)**
Inventor: **Schuetz, James E.**
**1512 Crane Ct.**
**Midland, Michigan 48640 (US)**
Inventor: **Lee, Do Ik**
**5109 Nakoma Drive**
**Midland, Michigan 48640 (US)**
Inventor: **Schwartz, James E.**
**2403 Dilloway Drive**
**Midland, Michigan 48640 (US)**
Inventor: **Tomalla, Donald Andrew**
**463 W. Chippewa River Rd. Rt. 6**
**Midland, Michigan 48640 (US)**

(74) Representative: **Hann, Michael, Dr. et al**
**Patentanwälte Dr. Michael Hann Dr. H.-G. Sternagel Sander Aue 30**
**D-5060 Bergisch Gladbach 2 (DE)**

EP 0 176 609 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

This invention relates to a method for preparing polymeric latexes, more specifically to self-curing polymer latexes.

Diverse self-curing polymer latexes are known in the art. For example, blends of a carboxylated latex such as an acrylic acid/styrene/butadiene terpolymer latex with a melamine formaldehyde or urea formaldehyde resin are known to be self-curing, i.e., they form a curing composition which cures at elevated temperatures.

Other self-curable latex systems employ a carboxylated latex which is crosslinked with a polyvalent cation or with a cationic polymer. Such latexes have the disadvantages of being pH dependent and of forming films which are highly sensitive to water, solvents and other chemicals.

DE—A—20 19 149 or the corresponding US—A—3,585,160 describes a polymer comprising acid groups and pendant oxazoline ester groups and solvent based coating composition prepared from said polymer. The polymerization of the copolymer is done by solution polymerization.

In US—A—3,509,235 a thermosetting composition is disclosed containing polyvinyl oxazines or oxazolines with polycarboxylic acid or carboxyl groups containing polymers. The copolymerization is conducted in solution. The mixtures are stable as such or in a dilution with conventional organic varnish solvents.

DE—A—20 12 810 describes a crosslinkable latex composition comprising either a mixture of different discrete copolymer particles each of them having a coreactive group or copolymer particle containing both of the coreactive groups when one of the reactive groups is an oxazoline group and the other coreactive group is preferably an acid group.

Accordingly, it would be desirable to provide a polymer latex which is self-curing without the formation of by-products and which latex, upon curing, forms films or adhesives having excellent physical properties and improved resistance to water and organic solvents.

It would also be desirable to provide a process by which polymers or polymer latexes containing both pendant acid and pendant oxazoline groups are prepared.

The object of the invention is attained by process for preparing a curable aqueous latex composition comprising discrete particles containing both pendant coreactive weak acid groups and pendant oxazoline groups by polymerizing in emulsion an addition polymerizable monomer containing pendant weak acid groups, an addition polymerizable oxazoline as represented by the formula:

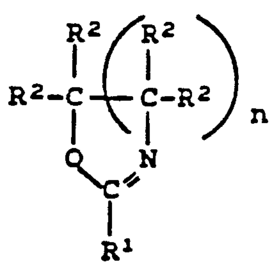

wherein $R^1$ is an acyclic organic radical having addition polymerizable unsaturation; each $R^2$ is independently hydrogen, halogen or an inertly substituted organic radical and n is 1 or 2 and at least one other monomer which does not contain pendant coreactive weak acid or oxazoline groups which is copolymerizable with these other monomers, characterized by

(a) polymerizing a first monomer mix comprising 0,1 to 20 weight percent of the monomers of said monomer containing pendant weak acid groups and at least one of said other copolymerizable monomers at a pH in the range from 1 to 6 and forming a latex,

(b) adjusting the pH of the resulting latex to 7 to 10,

(c) adding to said latex a second monomer mix comprising 0,1 to 20 weight percent of the monomers of said oxazoline and at least one of said other copolymerizable monomers and

(d) polymerizing said monomer fix under conditions such that the second monomer mix is polymerized within or around said polymer particles containing the pendant coreactive weak acid groups.

According to this invention both (a) the pendant coreactive groups and (b) the pendant oxazoline groups occur in the same latex particles in at least a portion of the latex particles.

Surprisingly, the latexes prepared by the method of this invention exhibit, upon drying and curing, excellent tensile strength and elongation, as well as superior resistance to water and solvents. Accordingly, such latexes are useful in a variety of applications including films, coatings, adhesives, binders for nonwoven fabrics and the like.

The latex compositions prepared by the method of this invention comprise discrete polymer particles having both pendant oxazoline and pendant coreactive weak acid groups present therein.

The oxazolines employed herein are as represented by the general structure:

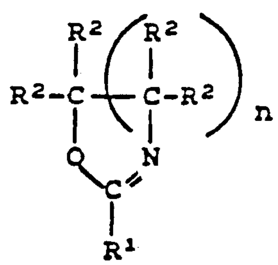

wherein $R^1$ is an acyclic organic radical having addition polymerizable unsaturation; each $R^2$ is independently hydrogen, halogen or an inertly substituted organic radical and n is 1 or 2. Preferably, $R^1$ is

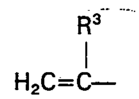

wherein $R^3$ is hydrogen or an alkyl radical. Most preferably, $R^1$ is an isopropenyl group. Each $R^2$ is preferably hydrogen or an alkyl group with hydrogen being most preferred; n is preferably 1. Most preferably the oxazoline is 2-isopropenyl-2-oxazoline.

The oxazoline modified polymer also contains repeating units derived from at least one monomer which is not an oxazoline and which is copolymerizable with the aforementioned oxazoline. A broad range of addition polymerizable monomers are copolymerizable with said oxazoline and are suitable herein. Suitable monomers include, for example, the monovinyl aromatics, alkenes, esters of α,β-ethylenically unsaturated carboxylic acid; carboxylic acid esters wherein the ester group contains addition polymerizable unsaturation; halogenated alkenes; and acyclic aliphatic conjugated dienes. Small amounts of crosslinking monomers such as divinylbenzene may also be employed.

The term "monovinyl aromatic monomer" is intended to include those monomers wherein a radical of the formula:

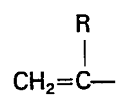

(wherein R is hydrogen or a lower alkyl such as an alkyl having from 1 to 4 carbon atoms) is attached directly to an aromatic nucleus containing from 6 to 10 carbon atoms, including those wherein the aromatic nucleus is substituted with alkyl or halogen substituents. Typical of these monomers are styrene; α-methylstyrene; ortho-, meta- and para-methylstyrene; ortho-, meta- and pra-ethylstyrene; o,p-dimethylstyrene; o,p-diethylstyrene; isopropylstyrene; o-methyl-p-isopropylstyrene; t-butyl styrene; p-chlorostyrene; p-bromostyrene; o,p-dichlorostyrene; o,p-dibromostyrene- vinylnaphthalene; diverse vinyl (alkylnaphthalenes) and vinyl (halonaphthalenes) and comonomeric mixtures thereof. Because of considerations such as cost, availability, ease of use, etc., styrene and vinyltoluene are preferred and styrene is especially preferred as the monovinyl aromatic monomer.

Alkenes suitable employed herein include the monounsaturated aliphatic organic compounds such as ethylene, n- and isopropylene, the diverse butenes, pentenes and hexenes as well as alkenes containing diverse substituent groups which are inert to the polymerization thereof. Preferred are unsubstituted $C_2$—$C_8$ alkenes with $C_2$—$C_4$ unsaturated alkenes being most preferred.

Esters of α,β-ethylenically unsaturated carboxylic acids useful herein include soft acrylates whose homopolymers have a glass transition temperature ($T_g$) of less than about 25°C such as benzyl acrylate, butyl acrylate, sec-butyl acrylate, cyclohexyl acrylate, dodecyl acrylate, ethyl acrylate, 2-ethylbutyl acrylate, 2-ethylhexyl acrylate, heptyl acrylate, hexyl acrylate, isobutyl acrylate, isopropyl acrylate, methyl acrylate and propyl acrylate. It is also suitable to use hard acrylates whose homopolymers have a $T_g$ of greater than about 25°C such as 4-biphenylyl acrylate and tert-butyl acrylate; soft methacrylates such as butyl methacrylate and hexyl methacrylate; and hard methacrylates such as sec-butylmethacrylate, tert-butyl methacrylate, cyclohexyl methacrylate, ethyl methacrylate, isobutyl methacrylate, isopropyl methacrylate, methyl methacrylate and propyl methacrylate. The cost, availability and known properties of butyl acrylate and ethyl acrylate make these monomers preferred among the acrylates. The cost, availability and known properties of methyl methacrylate make it preferred among the methacrylates.

Halogenated alkenes useful herein include, for example, vinyl chloride, vinylidene chloride, vinyl fluoride, vinylidene fluoride and the diverse polychloro-, polyfluoro- and polybromo-alkenes.

Acyclic aliphatic conjugated dienes usefully employed herein include typically those compounds which have from 4 to 9 carbon atoms, for example, 1,3-butadiene; 2-methyl-1,3-butadiene; 2,3-dimethyl-1,3-butadiene; pentadiene; and 2-neopentyl-1,3-butadiene. Also suitable are other hydrocarbon analogs of 1,3-butadienes, such as 2-chloro--1,3-butadiene and 2-cyano-1,3-butadiene; the substituted straight chain

conjugated pentadienes; the straight chain and branched chain conjugated hexadienes; other straight and branched chain conjugated dienes having from 4 to 9 carbon atoms; and comonomeric mixtures thereof. The 1,3-butadiene hydrocarbon monomers such as those mentioned hereinbefore provide interpolymers having particularly desirable properties and are therefore preferred. The cost, ready availability and the excellent properties of interpolymers produced therefrom makes 1,3-butadiene the most preferred acyclic aliphatic conjugated diene.

Mixtures of two or more of the foregoing monomers may, of course, be employed herein, if desired. Of the foregoing monomers, most preferred are styrene; mixtures of styrene and butadiene; butyl acrylate; methyl methacrylate and vinyl acetate.

The oxazoline is employed in relatively minor amount from 0.1 to 20, preferably from 1 to 10, weight percent of the monomers. In general, the oxazoline monomer is employed primarily to impart the desired self-curing characteristics to latex composition and the other monomers are employed to impart the other desired properties to the composition. For example, in a preferred oxazoline modified styrene/butadiene latex, the oxazoline modified polymer will advantageously exhibit physical properties (e.g., glass transition temperature and hardness) similar to those commonly associated with styrene/butadiene polymers. However, certain properties of the polymer, especially adhesion and crosslinking, will generally be enhanced by the inclusion of the oxazoline monomer.

The latex prepared by the method of this invention further comprises pendant coreactive groups. Said groups are capable of reacting with an oxazoline group to form a covalent bond thereto (hereinafter "coreactive").

The coreactive monomers (i.e., those containing pendant coreactive groups) employed herein are those which contain pendant coreactive groups which are capable of reacting with an oxazoline group to form a covalent bond thereto. It is understood that the reaction of such coreactive groups with the oxazoline group will typically, but not necessarily, cause the oxazoline ring to open.

Typically, the pendant coreactive group on the coreactive monomer will contain a reactive hydrogen atom. Exemplary coreactive groups containing an active hydrogen atom include strong and weak acid groups, aliphatic alcohols; aromatics alcohols, i.e., phenols; amines; and amides, i.e., $—CONH_2$ and —CONH— groups. In general, the more reactive of such groups, i.e., those having the more labile hydrogen, such as the acids and aromatic alcohols, are preferred herein. Such more reactive groups will generally react with the oxazoline ring more readily under milder conditions than the less reactive groups such as the amines and aliphatic alcohols. Amide groups are generally intermediate in reactivity.

Especially preferred are monomers containing pendant strong or weak acid groups including acid anhydride groups. Such monomers include those ethylenically unsaturated monomers containing acid groups, such as carboxylic acid and sulfonic acid groups, or acid anhydride groups. Sulfoethyl acrylate is an example of a suitable monomer containing a sulfonic acid group. Exemplary of suitable monomers containing carboxylic acid groups include itaconic acid, acrylic acid, methacrylic acid fumaric acid, maleic acid, vinylbenzoic acid and isopropenylbenzoic acid. The more preferred species include acrylic, methacrylic, fumaric, itaconic and maleic acids. Maleic anhydride is an example of a suitable monomer containing an acid anhydride group.

Suitable coreactive monomers containing phenolic groups include ortho- nd meta-vinyl phenol.

Suitable coreactive monomers containing aliphatic hydroxyl groups include, for example, hydroxyethylacrylate, hydroxypropyl methacrylate and N-hydroxymethyl-N-methyl acrylamide. Derivatives of styrene having aliphatic hydroxyl groups are also useful herein.

Suitable coreactive monomers containing amide groups include acrylamide, methacrylamide, vinyl acetamide and α-chloroacrylamide. N-methylacrylamides and N-methylmethacrylamide are examples of monomers containing $-(CONH)-$ groups.

Suitable coreactive monomers containing amine groups include allyl amine, 2-aminoethylacrylate and 2-aminoethylmethacrylate.

The other monomers suitably employed in the coreactive polymer particles are those which are copolymerizable with the coreactive monomer. In general, those monomers described hereinbefore as being useful in the preparation of the oxazoline modified polymer are also useful in the preparation of the coreactive polymer.

As with the oxazoline modified polymer, the polymer having the pendant coreactive groups generally contains only a minor portion of repeating units which are derived from the coreactive monomer. In general, the coreactive monomer is employed in amounts sufficient to impart the desired auto-curable properties to the latex composition and the other monomers are employed to impart the properties which are typically associated with polymers made from such monomers.

Conventional emulsion polymerization catalysts can be employed in the latex polymerization and common examples thereof include peroxides, persulfates and azo compounds. Suitable examples are sodium persulfate, potassium persulfate, ammonium persulfate, hydrogen peroxide and azodiisobutyric diamide. Also suitable are catalysts such as redox catalysts which are activated in the water phase, for example, by a water-soluble reducing agent. The type and amount of catalyst, as well as the particular polymerization conditions employed, will typically depend primarily on the other (i.e., non-coreactive and non-oxazoline) monomers which are used. Polymerization conditions will be generally selected to optimize the polymerization of such other monomers. Typically, the catalyst is employed in a catalytic amount, e.g.,

ranging from 0.01 to 5 weight percent based upon the monomer weight. In general, the polymerization is conducted at a temperature in the range of from −10° to 110°C (preferably from 50° to 90°C). Since the oxazoline group of the oxazoline monomer will hydrolyze or react with other monomers at high or low pH, the polymerization is conducted at such pH such that said hydrolysis or reaction is minimized. A pH of 7 to 10 is used. The polymerization may be conducted continuously, semi-continuously, or batch-wise.

Similarly, conventional chain transfer agents such as, for example, n-dodecyl mercaptan, bromoform and carbon tetrachloride can also be employed in the normal fashion in the aforementioned polymerization to regulate the molecular weight of the polymer formed therein. Typically, when such chain transfer agents are used, they are employed in amounts ranging from 0.01 to 10 (preferably from 0.1 to 5) weight percent based upon the weight of the monomers employed in the polymerization. Again, the amount of chain transfer agent employed depends somewhat on the particular chain transfer agent employed and the particular monomers being polymerized.

Suitable latex polymerization procedures are taught, for instance, in US—A—4,325,856; 4,001,163; 3,513,121; 3,575,913; 3,634,298; 2,399,684; 2,790,735; 2,880,189; and 2,949,386.

When the coreactive monomer is one containing pendant weakly acidic groups such as carboxyl groups, the polymerization is advantageously conducted under conditions sufficiently acidic to promote the copolymerization of the weakly acidic coreactive monomers with the other monomers being employed. Preferably the pH is maintained between 1 and 6, more preferably between 1 and 4. Then, following the polymerization reaction, the pH of the aqueous phase is typically adjusted with base to raise the pH to 7.5 to 9, in order to prevent hydrolysis of the oxazoline rings in the oxazoline-modified latex upon subsequent blending.

The latexes wherein both the pendant coreactive weak acid groups and pendant oxazoline groups occur in the same latex particles are prepared in a two-stage emulsion polymerization process. In the first stage of polymerization, a first monomer mix comprising an addition polymerizable coreactive weak acid monomer and at least one other monomer polymerizable therewith is polymerized.

Such first polymerization stage is conveniently conducted using substantially conventional emulsion polymerization techniques in aqueous medium with conventional additives as described above. Typically, the aqueous phase will contain from 0.5 to 5 weight percent (based on the monomer charge) of conventional nonionic or anionic emulsifiers.

Conventional emulsion polymerization catalysts such as those described above can be employed in the foregoing latex polymerization. As mentioned above, when the coreactive monomer is one containing pendant weakly acidic groups as described hereinbelow, such as carboxyl groups, the polymerization is advantageously conducted under conditions sufficiently acidic to promote the copolymerization of the weakly acidic coreactive monomers with the other monomers being employed. In such case, the pH is preferably between 1 and 6, more preferably between 1 and 4. The polymerization may be conducted continuously, semi-continuously or batch-wise.

Similarly, conventional chain transfer agents such as those mentioned above can also be employed in the normal fashion and amounts in the aforementioned first stage polymerization to regulate the molecular weight of the polymer formed therein.

The coreactive weak acid monomers employed when the pendant oxazoline group is polymerized in the same latex particles as the pendant coreactive group are those which contain pendant coreactive weak acid groups which are capable of reacting with an oxazoline group to form a covalent bond thereto. It is understood that the reaction of such coreactive weak acid groups with the oxazoline group will typically, but not necessarily, cause the oxazoline ring to open.

Especially preferred for the two-stage polymerization process according to the present invention are ethylenically unsaturated monomers containing pendant weak acid groups (including acid anhydride groups). Examples of such coreactive weak acid monomers containing carboxylic acid groups include itaconic acid, acrylic acid, methacrylic acid, fumaric acid, maleic acid, vinylbenzoic acid and isopropenylbenzoic acid. The more preferred species include acrylic, methacrylic, fumaric, itaconic and maleic acids. Maleic anhydride is an example of a suitable monomer containing an acid anhydride group.

In addition to the coreactive weak acid monomer, the first monomer mix also contains at least one other monomer which is not a coreactive monomer and which is copolymerizable with the coreactive monomer. The broad range of addition polymerizable monomers copolymerizable with said coreactive monomers is mentioned above.

The proportion of monomers used in the first monomer mix may vary considerably depending upon the particular end-use of the composition. The coreactive weak acid monomer is employed in a relatively minor amount from 0.1 to 20, preferably from 1 to 10, weight percent of the monomers. In general, the coreactive weak acid monomer is employed primarily to impart the desired self-curing characteristics to latex compositions and the other monomers employed to impart the other desired properties to the composition. For example, in a preferred acid/oxazoline-modified styrene/butadiene latex, the oxazoline-modified polymer will advantageously exhibit properties similar to those commonly associated with styrene/butadiene polymers, and the coreactive weak acid monomer contributes little except curing characteristics to the polymer. It is noted that weak acid-containing polymers also often exhibit enhanced colloidal stability.

Upon completion of the polymerization of the first monomer mix, the pH of the resulting coreactive

latex is adjusted, if necessary, into a range which is sufficiently high that during the subsequent polymerization of the second monomer mix containing oxazoline monomers, the oxazoline ring does not significantly react or hydrolyze i.e. adjustment of the pH into the range from 7 to 10. Any convenient water-soluble alkaline material, e.g., ammonium hydroxide, sodium hydrogen carbonate or sodium hydroxide, is advantageously employed to raise the pH to the aqueous phase.

To the coreactive latex is added a second monomer mix comprising an oxazoline monomer and at least one other addition polymerizable monomer which is not a coreactive monomer nor an oxazoline and which is copolymerizable with the oxazoline monomer. This "other" copolymerizable monomer and the oxazoline monomer are described above. The second monomer mix is added to the coreactive latex under conditions such that the monomers are polymerized within or around the coreactive latex particles. The general polymerization conditions employed are as described hereinbfore except that the pH of the aqueous phase is adjusted, if necessary, into the aforementioned range (i.e., sufficient to prevent substantial reaction or hydrolysis of the oxazoline monomer) during the polymerization reaction.

If necessary or desired, additional amounts of aqueous phase emulsifier, catalyst, initiator and the like may be added to the coreactive latex prior to or simultaneously with the addition of the second monomer mix in order to facilitate the polymerization thereof.

The second stage of the polymerization may be conducted immediately following the preparation of the coreactive latex. Alternatively, the coreactive latex may be prepared beforehand and stored until the second stage polymerization is conducted.

It is often desirable to "match" the monomers employed in the first monomer mix with those in the second monomer mix, i.e., to employ the same or substantially similar monomers in the same or substantially similar proportions in both the first and second monomer mixes. For example, if styrene, butadiene and acrylic acid are employed in the first monomer mix, a second monomer mix containing styrene, butadiene and oxazoline monomer can be employed to match said first and second monomer mix. Of course, it is not necessary or always desirable to match the backbone of the first and second monomer mixes in the practice of this invention. More generally, the choice of other monomers in both the first and second monomer mixes is such that the resulting latex has the desired physical and chemical properties.

The proportions of monomers used in the second monomer mix may vary considerably depending on the particular end-use of the composition. Oxazoline is employed in a relatively minor amount from 0.1 to 20, and preferably from 1 to 10, weight percent of the monomers. In general, the oxazoline monomer is employed primarily to impart the self-curing characteristics to the latex and the other monomers are employed to impart the other desired properties to the latex.

Advantageously, the second monomer mix contains from 0.05 to 20, preferably from 0.2 to 5, more preferably from 0.5 to 2, moles of oxazoline monomer per mole of coreactive monomer employed in the first monomer mix. Most preferably, the amount of oxazoline monomer employed is substantially equivalent on a molar basis to the amount of acid monomer employed.

Following the polymerization of the second monomer mix, there is obtained a curable latex composition. Such composition comprises discrete polymer particles which polymer particles have been prepared by the addition polymerization of monomers comprising (a) a coreactive monomer, (b) an oxazoline monomer as described hereinbefore and (c) at least one other addition polymerizable monomer. When the other monomer in the first monomer mix is different from the other monomers employed in the second monomer mix, the resulting latex particles will have been prepared from, in addition to the oxazoline and coreactive monomers, at least two other addition polymerizable monomers. While not intending to be bound by theory, it is believed that the polymer particles in the latex prepared by this process are structured latexes in which the polymers prepared in the second monomer mix either encapsulate or interpenetrate the polymers prepared from the first monomer mix. However, it is recognized that during the polymerization of said second monomer mix, certain amounts of graft or block copolymers may be formed. The precise polymeric structure of the polymer particles is not considered critical to this invention. Essential features of the polymer particles are that such particles contain both pendant coreactive groups and pendant oxazoline groups.

Advantageously, the polymer particles have a particle size distribution such that, upon film formation, the particles can become relatively closely packed together to form coherent films.

The curable latex compositions may be used for a variety of applications including paper coating compositions, adhesives, binders and fibrous, nonwoven fabric compositions and the like. Such compositions are especially suitable for those applications in which a self-curable, curable polymer composition is desired.

The latexes prepared by the method of this invention may be employed as adhesives, films or binders by applying the latex to the desired substrate, then dewatering the latex and curing the dewatered polymers. The dewatering step may be performed by merely allowing the aqueous phase to evaporate under ambient conditions. Alternatively, elevated (i.e., 50°—165°C) temperatures may be employed to dewater the latex. Curing of the polymer may, likewise, be performed at ambient temperatures. Such ambient temperature curing is an unexpected property of the latexes of this invention. Such room temperature curing is generally conducted over a period of several hours to several days depending on the particular polymers employed, the amounts of oxazoline and coreactive groups in the polymer, the thickness of the film adhesive or binder layer, the amount of cross-linking desired and like factors. Curing

may also be effected by heating the polymers preferably to 105° to 165°C, more preferably 135° to 150°C for short periods. The foregoing drying and curing points may not be distinct steps but may be carried out simultaneously if desired.

The following example is intended to illustrate this invention. All parts and percentages are by weight unless otherwise indicated.

Example 1

Two-Stage Polymerized Latex Compositions

Into a 0.0038 cubic meter (1-gallon), jacketed reactor equipped with lab pumps to deliver monomer and aqueous feeds were added 593 g of deionized water, 7 g of a 1 percent active aqueous pentasodium diethylene triamine pentacetate solution and 21.9 g of a 32 percent solids seed latex containing polystyrene particles having a volume average particle size of about 0.0263 μm.

The reactor was purged with nitrogen and heated to 90°C. Then, over a 3-hour period, a monomer stream containing 455 g of butyl acrylate, 217 g of styrene, 28 g of acrylic acid and 3.8 g of 55 percent active divinylbenzene was added. Beginning simultaneously with the start of the monomer stream was added continuously over a 4-hour period 245 g of deionized water, 15.56 g of a 45 percent active aqueous surfactant solution, 14 g of a 10 percent aqueous sodium hydroxide solution and 4.9 g of sodium persulfate. Following addition of the monomer and aqueous streams, the reaction mixture was heated at 90°C for 1 additional hour and then cooled. The product was a 45 percent solids latex of a butyl acrylate/styrene/acrylic acid/divinylbenzene polymer in a 65:31:4:0.3 percent weight ratio.

A 1244.0 g portion of the resulting coreactive latex was then placed into a 0.0038 cubic meter (1-gallon) stainless steel reactor together with 100 g of water and sufficient ammonium hydroxide to increase the pH from 3.9 to 8.7. The reactor was then purged with nitrogen and the monomer mix comprising 14 g of 2-isopropenyl-2-oxazoline, 91 g of butyl acrylate and 35 g of styrene were added. Also added were 171 g of deionized water and 0.7 g of sodium persulfate. The resulting mixture was then polymerized at 60°C for 8 hours and cooled. The resultant latex contained polymer particles having both pendant acid and pendant oxazoline groups, as confirmed by infrared spectroscopy.

The resultant latex was thickened with a small amount of sodium polyacrylate and 0.51 millimeter (20-mil) thick films of the latex were cast onto a Teflon brand coated steel plate using a film bar of 0.51 millimeter (20-mil) thickness. The films were then dried at ambient temperature until they were transparent and then they were peeled from the plate and further dried at ambient temperature for about 24 hours. The air-dried films were then cured for 5 minutes in an oven set at diverse curing temperatures (80°C, 120°C or 150°C). The cured films were then cut into 13 millimeter (0.5-inch) wide strips and tested on an Instron tensile tester to measure elongation and tensile strength at break. Duplicate cured films were soaked in an excess of an aqueous solution containing 0.5 percent Aerosol OT brand surfactant for 5 minutes and then tested on an Instron to measure elongation and tensile strength at break. For comparison, a sample of the carboxylic latex containing no pendant oxazoline group was formed into films and tested as described herein. The results from testing this comparative example are reported as Sample No. C—1 in Table I following. The results obtained on films prepared from the latex of this invention are reported in Table I following as Sample No. 1. The tensile strength values are given in MPa.

TABLE I

| | Sample No. 1 | Comparative Sample No. C-1* |
|---|---|---|
| R. T. Cure[1] | | |
| Dry Tensile[2] | 5.62 | 7.48 |
| Wet Tensile[3] | 6.27 | 2.64 |
| Dry Elong.[4] | 351 | 413 |
| Wet Elong.[5] | 285 | 435 |
| 100°C Cure[6] | | |
| Dry Tensile | 9.55 | 6.65 |
| Wet Tensile | 7.75 | 3.25 |
| Dry Elong. | 304 | 395 |
| Wet Elong. | 275 | 443 |
| 120°C Cure[7] | | |
| Dry Tensile | 9.38 | 5.87 |
| Wet Tensile | 8.96 | 2.61 |
| Dry Elong. | 268 | 399 |
| Wet Elong. | 283 | 401 |
| 150°C Cure[8] | | |
| Dry Tensile | 10.07 | 5.94 |
| Wet Tensile | 11.36 | 3.87 |
| Dry Elong. | 236 | 403 |
| Wet Elong. | 260 | 504 |

* Not an example of the invention.

[1] Films cured at room temperature for 24 hours.

[2] Tensile strength in MPa of films cured at designated temperatures measured in dry films using an Instron tensile tester.

[3] Tensile strength in MPa of films cured at the designated temperatures, measured on films soaked for 5 minutes in a 0.5 percent aqueous surfactant solution immediately before testing. Testing performed on an Instron tensile tester.

[4] Percent elongation of films cured at designated temperatures measured on dry films using an Instron tensile tester.

[5] Percent elongation of films cured at the designated temperature, measured on films soaked in an aqueous surfactant solution immediately before testing. Testing performed on an Instron Tensile tester.

[6] Films cured at 100°C for 5 minutes.

[7] Films cured at 120°C for 5 minutes.

[8] Films cured at 150°C for 5 minutes.

As can be seen from Table I above, the latex of this invention formed films having higher tensile strength than the films formed from the control latex. More significantly, the tensile strength of the films of this invention was not significantly impaired upon soaking the films in the surfactant-containing water. In fact, at high curing temperatures, wetting of the films actually increases their tensile strength. By contrast, the control sample lost significant tensile strength upon soaking in the surfactant solution.

Example 2

In this example, a coreactive latex (51 percent solids) containing a styrene/butadiene/fumaric acid terpolymer (57.6/40.5/1.9 weight ratio) was used as a starting material.

A 1584 g portion of this latex is added to a 0.0038 cubic meter (1 gallon) stainless steel reactor. Sufficient of the 28 percent aqueous ammonium hydroxide solution was added to the latex to increase the pH to about 8.5. Then, 198 g of deionized water, 2 g of a 1 percent active sodium diethylene triamine pentaacetate solution, 1 g of sodium persulfate, 20 g of 2-isopropenyl-2-oxazoline, 99 g of styrene and 4 g of carbon tetrachloride were added. The reactor was then purged with nitrogen and 81 g of butadiene were added. The reaction mixture was then heated to 60°C for 8 hours. The latex was then steam distilled to remove the unreacted monomers. The resulting latex contained particles having both pendant coreactive and pendant oxazoline groups, as confirmed by infrared spectroscopy. Films were prepared from the product latex and cured as described in Example 1 hereinbefore. The tensile properties of the resultant films were evaluated as described in Example 1 with the results as reported as Sample No. 2 in Table II following.

For comparison, a portion of the coreactive latex which has not been modified with the oxazoline polymer was formed into films, cured and tested as described in Example 1. The results were as reported in Sample No. C—2 in Table II following.

TABLE II

| | Sample No. 2 | Comparative Sample No. C-2* |
|---|---|---|
| R. T. Cure[1] | | |
| Dry Tensile[2] | 6.87 | 7.25 |
| Wet Tensile[3] | 2.80 | 0.71 |
| Dry Elong.[4] | 443 | 552 |
| Wet Elong.[5] | 351 | 207 |
| 100°C Cure[6] | | |
| Dry Tensile | 7.39 | 8.09 |
| Wet Tensile | 3.16 | 0.76 |
| Dry Elong. | 447 | 531 |
| Wet Elong. | 362 | 286 |
| 120°C Cure[7] | | |
| Dry Tensile | 8.74 | 8.38 |
| Wet Tensile | 4.30 | 0.85 |
| Dry Elong. | 455 | 546 |
| Wet Elong. | 387 | 361 |
| 150°C Cure[8] | | |
| Dry Tensile | 9.79 | 10.34 |
| Wet Tensile | 8.24 | 2.70 |
| Dry Elong. | 435 | 579 |
| Wet Elong. | 405 | 405 |

* Not an example of the invention.

Notes [1] through [8] are the same as in Table I .

Here, it is seen that the dry tensile strength of the carboxylated, IPO modified latex is essentially equivalent to those of the dry carboxylated latex. However, when wet tensile strength is evaluated, the films prepared from latexes are clearly superior to those of the control.

Example 3

In this example, a 48.6 percent solids latex of a 58/38/4 ratio of styrene/butadiene/acrylic acid terpolymer was employed as coreactive starting material.

A 1646 g portion of this latex was added to a 0.0038 cubic meter (1 gallon) stainless steel reactor. Sufficient of a 28 percent aqueous ammonium hydroxide solution was added to the latex to increase the pH to about 8.6. Then, 198 g of deionized water, 1 g of sodium persulfate, 2.0 g of a 1 percent active sodium diethylene tetraamine pentaacetate solution, 20 g of 2-isopropenyl-2-oxazoline, 96 g of styrene and 6 g of carbon tetrachloride were added to the reactor. The reactor is then purged with nitrogen and 84 g of butadiene were added. The resulting mixture was then polymerized at 60°C for 7 hours. The resultant latex contained particles having both pendant acid and pendant oxazoline groups. Films were formed from the product latex according to the method described in Example 2 and were tested for tensile properties. The results were as reported in Table III. For comparison, films were prepared from the carboxylated latex containing no oxazoline groups. These films were tested for tensile properties with the results as reported in Table III following as Sample No. C—3.

TABLE III

| | Sample No. 3 | Comparative Sample No. C-3* |
|---|---|---|
| R. T. Cure[1] | | |
| Dry Tensile[2] | 11.32 | 11.78 |
| Wet Tensile[3] | 6.64 | 9.74 |
| Dry Elong.[4] | 411 | 370 |
| Wet Elong.[5] | 315 | 276 |
| 100°C Cure[6] | | |
| Dry Tensile | 12.54 | 12.75 |
| Wet Tensile | 10.41 | 9.74 |
| Dry Elong. | 406 | 395 |
| Wet Elong. | 347 | 276 |
| 120°C Cure[7] | | |
| Dry Tensile | 10.41 | 12.07 |
| Wet Tensile | 11.02 | 12.25 |
| Dry Elong. | 403 | 378 |
| Wet Elong. | 348 | 342 |
| 150°C Cure[8] | | |
| Dry Tensile | 13.44 | 12.02 |
| Wet Tensile | 13.85 | 12.45 |
| Dry Elong. | 355 | 377 |
| Wet Elong. | 324 | 331 |

* Not an example of the invention.

Notes [1] through [8] are the same as in Table III.

Again, the excellent tensile properties of wet and dry films of this invention were seen.

Example 4

Into a 1 liter, glass reactor immersed in a temperature controlled water bath were added 359 g of deionized water, 3 g of a 1 percent active aqueous pentasodium diethylene triamine pentaacetate solution and 4.5 g of a 32 percent solids seed latex containing polystyrene polymer particles.

The reactor was purged with nitrogen and heated to 83°C. Then, over a 1 hour period was added a first monomer stream containing 90 g of butylacrylate, 53.75 g of methylmethacrylate and 5.0 g of acrylic acid. After this first monomer addition, the reactor was maintained at about 83°C for 15 minutes. Three grams of 28 percent ammonium hydroxide solution was added to increase the pH from 3.5 to 8.3, and then a second monomer stream was begun. This second monomer stream was added over a 1 hour period and contained 90 g of butylacrylate, 53.75 g methylmethacrylate and 7.5 g of 2-isopropenyl-2-oxazoline. Beginning at the start of the first monomer addition was also added, over a $2\frac{1}{4}$ hour period, an aqueous stream containing 90 g deionized water, 1.5 g of sodium persulfite, 0.3 g NaOH and 3.3 g of a 45 percent active surfactant solution. Following the addition of the monomer and aqueous streams, the reactor was maintained at 83°C for 1 additional hour, and then cooled.

This latex is formed into films as described in Example 1. The films are cured by heating at 125°C for 5 minutes and tested for tensile strength and elongation as described in Example 1. The results are reported as Sample No. 4 in Table IV following.

For comparison, films are prepared in like manner from the following latexes:

Sample No. C—4A Butylacrylate/methylmethacrylate (60/40)
Sample No. C—4B Butylacrylate/methylmethacrylate/acrylic acid (60/38.33/1.67)
Sample No. C—4C Butylacrylate/methylmethacrylate/2-isopropenyl-2-oxazoline (60/37.5/2.5)
Sample No. C—4D 50:50 Blend of C—4B and C—4C

All films are tested for tensile strength and elongation as described hereinbefore with the results as reported in Table I following.

TABLE IV

| | Sample No. | | | | |
|---|---|---|---|---|---|
| | 4 | C-4A* | C-4B* | C-4C* | C-4D |
| Dry Tensile[1] | 9.79 | 4.90 | 6.62 | 6.76 | 7.45 |
| Dry Elongation[2] | 560 | 730 | 680 | 780 | 690 |
| Wet Tensile[3] | 6.48 | 2.62 | 5.10 | 5.93 | 6.25 |
| Wet Elongation[4] | 430 | 550 | 630 | 600 | 630 |

* Not an example of the invention.

[1] Same as Note[2], Table I .

[2] Same As Note[4], Table I .

[3] Same as Note[3], Table I .

[4] Same as Note[5], Table I .

As can be seen from the data in Table IV, films prepared from the latex of this invention exhibit the highest tensile strength, whether tested wet or dry.

## Claims

1. A process for preparing a curable aqueous latex composition comprising discrete particles containing both pendant coreactive weak acid groups and pendant oxazoline groups by polymerizing in emulsion an addition polymerizable monomer containing pendant weak acid groups, an addition polymerizable oxazoline as represented by the formula:

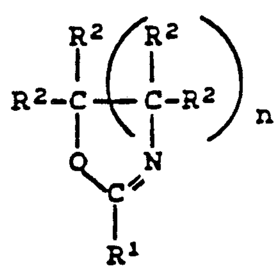

wherein $R^1$ is an acyclic organic radical having addition polymerizable unsaturation; each $R^2$ is independently hydrogen, halogen or an inertly substituted organic radical and n is 1 or 2 and at least one other monomer which does not contain pendant coreactive weak acid or oxazoline groups which is copolymerizable with these other monomers, characterized by

(a) polymerizing a first monomer mix comprising 0.1 to 20 weight percent of the monomers of said monomer containing pendant weak acid groups and at least one of said other copolymerizable monomers at a pH in the range from 1 to 6 and forming a latex,

(b) adjusting the pH of the resulting latex to 7 to 10,

(c) adding to said latex a second monomer mix comprising 0.1 to 20 weight percent of the monomers of said oxazoline and at least one of said other copolymerizable monomers and

(d) polymerizing said monomer fix under conditions such that the second monomer mix is polymerized within or around said polymer particles containing the pendant coreactive weak acid groups.

2. The process of claim 1 wherein said first monomer mix comprises an α,β-ethylenically unsaturated carboxylic acid and a monovinyl aromatic monomer or an alkyl ester of an α,β-ethylenically unsaturated carboxylic acid or an aliphatic conjugated diene and said second monomer mix comprises an addition polymerizable oxazoline and a monovinyl aromatic latex, an alkyl ester of an α,β-ethylenically unsaturated carboxylic acid or an aliphatic conjugated diene.

3. The process of claim 1 wherein the oxazoline is 2-isopropenyl-2-oxazoline.

4. The process of claim 1 wherein the second monomer mix contains from 0.5 to 2 moles of oxazoline per mole of coreactive monomer employed in said first monomer mix.

5. The process of claim 1 wherein the coreactive monomer is acrylic, methacrylic, itaconic or fumaric acid, and the oxazoline is 2-isopropenyl-2-oxazoline.

**Patentansprüche**

1. Verfahren zum Herstellen einer härtbaren wäßrigen Latexzusammensetzung, enthaltend diskrete Teilchen, die beides enthalten, anhängende koreaktive Gruppen schwacher Säuren und anhängende Oxazolingruppen, durch Emulsionspolymerisation eines durch Additionspolymerisation polymerisierbaren, anhängende Gruppen schwacher Säuren aufweisenden Monomer mit einem durch Additionspolymerisation polymerisierbaren Oxazolin der Formel:

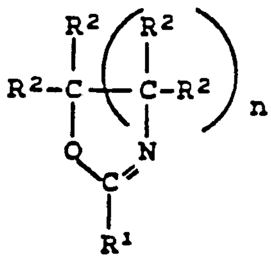

in der $R^1$ ein azyklischer organischer Rest mit einer additionspolymerisierbaren ungesättigten Gruppe ist, jedes $R^2$ ist unabhängig Wasserstoff, Halogen oder ein inert substituierter organischer Rest, und n ist 1 oder 2, und mit mindestens einem anderen Monomer, das keine anhängenden koreaktiven Gruppen schwacher Säuren oder Oxazolingruppen aufweist und mit den anderen Monomeren copolymerisierbar ist, gekennzeichnet durch

(a) Polymerisieren einer ersten Monomermischung, enthaltend 0,1 bis 20 Gewichtsprozent der Monomeren des Monomeren, das anhängende Gruppen schwacher Säuren enthält, und mindestens eines der anderen copolymerisierbaren Monomeren bei einem pH-Wert im Bereich von 1 bis 6, und Ausbilden eines Latex,

(b) Einstellen des pH-Wertes des erhaltenen Latex auf 7 bis 10,

(c) Hinzufügen zum Latex einer zweiten Monomermischung, enthaltend 0,1 bis 20 Gewichtsprozent der Monomeren des Oxazolins, und mindestens eines der copolymerisierbaren Monomeren, und

(d) Polymerisieren dieser Monomermischung unter Bedingungen, unter denen die zweite Monomermischung innerhalb oder um die Polymerteilchen mit den anhängenden koreaktiven Gruppen schwacher Säuren polymerisiert.

2. Verfahren nach Anspruch 1, dadurch gekennzeichnet, daß die erste Monomermischung enthält eine α,β-ethylenisch ungesättigte Carbonsäure und ein monovinylaromatisches Monomer oder ein Alkylester einer α,β-ethylenisch ungesättigten Carbonsäure oder ein aliphatisches, konjugiertes Dien, und die zweite Monomermischung enthält ein additionspolymerisierbares Oxazolin und ein monovinylaromatisches Monomer, einen Alkylester einer α,β-ethylenisch ungesättigten Carbonsäure oder ein aliphatisches, konjugiertes Dien.

3. Verfahren nach Anspruch 1, dadurch gekennzeichnet, daß das Oxazolin 2-Isopropenyl-2-oxazolin ist.

4. Verfahren nach Anspruch 1, dadurch gekennzeichnet, daß die zweite Monomermischung 0,5 bis 2 Mole Oxazolin pro Mol koreaktives, in der ersten Monomermischung verwendetes Monomer enthält.

5. Verfahren nach Anspruch 1, dadurch gekennzeichnet, daß das koreaktive Monomer Acrylsäure, Methacrylsäure, Itakonsäure oder Fumarsäure ist und das Oxazolin 2-Isopropenyl-2-oxazolin ist.

**Revendications**

1. Procédé pour la préparation d'une composition de latex aqueux vulcanisable comprenant des particules discrètes contenant tant des groupes latéraux coréactifs acide faible que des groupes latéraux oxazoline par polymérisation en émulsion d'un monomère polymérisable d'addition contenant des groupes latéraux acide faible, une oxazoline polymérisable d'addition, telle que représentée par la formule:

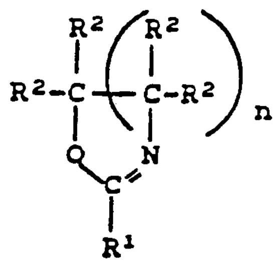

dans laquelle $R^1$ est un radical organique acyclique ayant une insaturation polymérisable d'addition; chaque $R^2$ est indépendamment un hydrogène, un halogène ou un radical organique substitué inertement et n est 1 ou 2 et au moins un autre monomère ne contenant pas de groupes latéraux coréactifs acide faible ou oxazoline, copolymérisable avec ces autres monomères, caractérisé par

(a) polymérisation d'un premier mélange de monomères comprenant de 0,1 à 20 pour cent en poids des monomère dudit monomère contenant des groupes latéraux acide faible et au moins l'un desdits autres monomères copolymérisables à un pH dans la gamme de 1 à 6 et formation d'un latex,

(b) ajustage du pH du latex qui en résulte, entre 7 et 10,

(c) addition audit latex d'un second mélange de monomères comprenant de 0,1 à 20 pour cent en poids des monomères de ladite oxazoline et au moins l'un desdits autres monomères copolymérisables et

(d) polymérisation dudit mélange de monomères dans des conditions telles que le second mélange de monomères soit polymérisé dans ou autour desdits particules de polymère contenant les groupes latéraux coréactifs acide faible.

2. Procédé de la revendication 1, dans lequel ledit premier mélange de monomères comprend un acide carboxylique α,β-éthyléniquement insaturé et un monomère aromatique monovinyle ou un ester alcoyle d'un acide carboxylique α,β-éthyléniquement insaturé ou un diène conjugué aliphatique et ledit second mélange de monomères comprend une oxazoline polymérisable d'addition et un monomère aromatique monovinyle, un ester alcoyle d'un acide carboxylique α,β-éthyléniquement insaturé ou un diène conjugué aliphatique.

3. Procédé de la revendication 1, dans lequel l'oxazoline est la 2-isopropényl-2-oxazoline.

4. Procédé de la revendication 1, dans lequel ledit second mélange de monomères contient de 0,5 à 2 moles d'oxazoline par mole de monomère coréactif utilisé dans ledit premier mélange de monomères.

5. Procédé de la revendication 1, dans lequel le monomère coréactif est de l'acide acrylique, méthacrylique, itaconique ou fumarique et l'oxazoline est la 2-isopropényl-2-oxazoline.